# EUROPEAN PATENT APPLICATION

(11) **EP 4 621 269 A1**
(43) Date of publication of application: **24.09.2025**
(21) Application number: 23902718.8
(22) Date of filing: 12.12.2023
(51) Int. Cl.: F16K 1/02, F16K 1/32, F16K 1/38

(54) **ELECTRONIC EXPANSION VALVE AND ASSEMBLY METHOD**

(30) Priority: 12.12.2022 CN 202211591648; 21.03.2023 CN 202320622753 U
(71) Applicant: Zhejiang Dunan Artificial Environment Co., Ltd., Shaoxing Zhejiang 311835 (CN)
(72) Inventor: YANG, Zhongyu, Shaoxing, Zhejiang 311835 (CN); JIN, Ju, Shaoxing, Zhejiang 311835 (CN); WANG, Fugang, Shaoxing, Zhejiang 311835 (CN)
(74) Representative: Dehns Germany Partnerschaft mbB
(86) International application number: PCT/CN2023/138234
(87) International publication number: WO 2024/125522

(57) **Abstract**

Provided is an electronic expansion valve and an assembly method. The electronic expansion valve includes a valve seat portion having a valve chamber and a valve port; and a valve needle portion disposed in the valve chamber and including a large valve needle and a soft sealing member connected to the large valve needle, wherein the soft sealing member is configured to close or open the valve port, an annular sealing ring is formed at a position where an outer surface of the soft sealing member is in contact with an inner surface of the valve port, and at least a portion of the soft sealing member is located outside a region surrounded by the annular sealing ring. In the present solution, a portion of the soft sealing member is located outside the region surrounded by the annular sealing ring, meaning that the size of the soft sealing member is made relatively large, such that the load-bearing capacity, deformation resistance and temperature variation resistance of the soft sealing member are all enhanced, thereby ensuring a sealing effect on the valve port. Even if the soft sealing member undergoes certain deformation, a sufficient sealing contact area can still be guaranteed when the soft sealing member is in contact with the valve port, thereby maintaining the sealing effect. Accordingly, the present solution improves the long-term reliability of the electronic expansion valve.

## Description

The present invention claims priority to Chinese Patent Application No. 202211591648.1, filed on December 12, 2022, with the China National Intellectual Property Administration, and titled "Electronic Expansion Valve and Assembly Method", and Chinese Patent Application No. 202320622753.0, filed on March 21, 2023, with the China National Intellectual Property Administration, and titled "Electronic Expansion Valve".

### Technical Field

The present invention relates to the technical field of electronic expansion valves, and in particular, to an electronic expansion valve and an assembly method.

### Background

In an electronic expansion valve, the sealing performance of a closed valve port is critical. In some solutions, to ensure a good sealing effect, a soft sealing member is sleeved onto a valve needle and engaged with the valve port, closing the valve port through the soft sealing member. However, an outer diameter of the existing soft sealing member does not exceed an outer diameter of the valve needle. For instance, the soft sealing member is embedded in a recess on the valve needle, and the outer diameter of the soft sealing member is relatively small. After prolonged use, especially in high or low-temperature operational environments, the soft sealing member tends to deform. The deformed soft sealing member results in poor sealing effect at the valve port, which may even cause product failure. Therefore, the soft sealing member in existing electronic expansion valves suffers from the problem of easy deformation, leading to poor reliability after long-term use.

### Summary

The present invention provides an electronic expansion valve and an assembly method to solve the problem in the prior art where soft sealing members in electronic expansion valves are prone to deformation, resulting in a poor sealing effect, thereby improving the long-term reliability of the electronic expansion valve.

To solve the above problem, some embodiments of the present invention provide an electronic expansion valve, including a valve seat portion having a valve chamber and a valve port; and a valve needle portion disposed in the valve chamber and including a large valve needle and a soft sealing member connected to the large valve needle, where the soft sealing member is configured to close or open the valve port, an annular sealing ring is formed at a position where an outer surface of the soft sealing member is in contact with an inner surface of the valve port, and at least a portion of the soft sealing member is located outside a region surrounded by the annular sealing ring.

Further, the electronic expansion valve includes a guide sleeve, the guide sleeve is located in the valve chamber, and the large valve needle passes through the guide sleeve; the large valve needle reciprocates along the guide sleeve and is in sealing engagement with the guide sleeve; a dimension of the annular sealing ring is approximately equal to an inner diameter of the guide sleeve, where an outer diameter of the soft sealing member is greater than an outer diameter of a structure of the large valve needle located within the guide sleeve.

Further, the large valve needle includes a limiting section and a guiding section that are interconnected, where the guiding section passes through the guide sleeve, the limiting section is located on a side of the guide sleeve away from the valve port, and a radial dimension of the limiting section is greater than the inner diameter of the guide sleeve;

The valve needle portion further includes an inner sealing ring, which is located between an inner wall of the guide sleeve and an outer wall of the large valve needle;

The outer wall of the large valve needle is provided with an inner sealing groove, the inner sealing ring is installed in the inner sealing groove, and an outer surface of the inner sealing groove abuts against the inner wall of the guide sleeve.

The valve needle portion further includes a small valve needle, a maximum radial dimension of the soft sealing member is greater than a maximum radial dimension of the small valve needle, the large valve needle is fixedly connected to the small valve needle, and the soft sealing member is disposed between the large valve needle and the small valve needle.

Further, the small valve needle includes an adjustment section and an assembly section which are interconnected, a radial dimension of the assembly section is smaller than a radial dimension of the adjustment section, the adjustment section is configured to be inserted into the valve port, the soft sealing member is sleeved on the assembly section, and a portion of the assembly section is inserted into the large valve needle; an outer wall of the assembly section is in an interference fit with an inner wall of the large valve needle; an end of the soft sealing member abuts against an end surface of the adjustment section, and an other end of the soft sealing member abuts against an end surface of the assembly section;

The adjustment section is provided with a press-fit recess, an opening of which faces the valve port, and the press-fit recess is configured to receive a press-fitting tool;

An outer wall of an end of the assembly section away from the valve port has a chamfer;

Before assembly, an inner diameter of an inner circumferential surface of the soft sealing member is smaller than an outer diameter of the assembly section, and an axial length of the soft sealing member is greater than a distance between the adjustment section and the large valve needle;

An end of the inner circumferential surface of the soft sealing member facing the adjustment section has an assembly chamfer;

The material of the soft sealing member is rubber or plastic, and the materials of the small valve needle and the large valve needle are metal;

Or, the large valve needle includes a guiding section and a mounting section that are interconnected. A radial dimension of the mounting section is smaller than a radial dimension of the guiding section. The soft sealing member is sleeved on the mounting section. The small valve needle is annular and is sleeved on the mounting section. A maximum radial dimension of the soft sealing member is greater than a radial dimension of the guiding section, and the soft sealing member is disposed between an end surface of the small valve needle and an end surface of the guiding section.

Further, the small valve needle includes an adjustment section and an assembly section that are interconnected, a radial dimension of the assembly section is smaller than a radial dimension of the adjustment section, the adjustment section is configured to be inserted into the valve port, and the soft sealing member is sleeved on the assembly section;

A maximum diameter of an outer circumferential surface of the soft sealing member is greater than a maximum inner diameter of the valve port, an end of the outer circumferential surface of the soft sealing member facing the valve port has a sealing chamfered surface, an outer diameter of an end surface of the soft sealing member facing the valve port is smaller than an inner diameter of the valve port, and an end of the valve port facing the valve chamber has a sealing arc surface, where the sealing chamfered surface and the sealing arc surface are in sealing engagement;

An inner circumferential surface of the valve port is a cylindrical surface, the adjustment section includes a cylindrical section and a first tapered section, the cylindrical section abuts against the soft sealing member, and a large-diameter end of the first tapered section is connected to the cylindrical section, where a clearance is formed between the cylindrical section and an inner circumferential surface of the valve port;

The adjustment section further includes a second tapered section, and a large-diameter end of the second tapered section is connected to a small-diameter end of the first tapered section;

A taper angle of the second tapered section is greater than a taper angle of the first tapered section.

Further, the electronic expansion valve also includes a nut assembly and a screw rod assembly, the nut assembly is fixedly connected to the valve seat portion, the screw rod assembly is in a threaded connection with the nut assembly, and the screw rod assembly is engaged with the large valve needle to drive the valve needle portion to reciprocate;

The valve needle portion also includes a large elastic member, an end of which abuts against an inner wall of the valve seat portion, and an other end of which abuts against the large valve needle, so as to exert a force toward the valve port on the valve needle portion;

The large elastic member is a spring and is sleeved on the screw rod assembly;

The valve seat portion has a valve seat ring, the screw rod assembly passes through the valve seat ring, and the end of the large elastic member abuts against an end of the valve seat ring;

The large valve needle has an annular member, and an other end of the large elastic member abuts against the annular member;

The valve seat portion is circumferentially provided with a plurality of orifices, and each of the plurality of orifices extends radially along the valve seat portion and is directed towards the valve needle portion; or, a first connecting pipe is disposed at the valve port, which is in communication with the valve port, and a second connecting pipe is disposed on a sidewall of the valve seat portion, which is in communication with the valve chamber of the valve seat portion.

Further, the electronic expansion valve also includes a screw rod assembly, the screw rod assembly is in engagement with the valve needle portion to drive the valve needle portion to reciprocate;

The valve seat portion has a valve seat ring, the screw rod assembly passes through the valve seat ring, and a flow clearance is formed between an outer wall of the screw rod assembly and an inner wall of the valve seat ring;

The valve needle portion is internally provided with a flow passage, an end of which is in communication with the valve port, and an other end of which is in communication with a chamber within the screw rod assembly; a sidewall of the screw rod assembly is provided with a first communication hole, and the chamber within the screw rod assembly is in communication with the flow clearance by the first communication hole;

The electronic expansion valve further includes a nut assembly and a valve tube, the nut assembly is fixedly connected to the valve seat portion, the screw rod assembly is in a threaded connection with the nut assembly, and the valve tube is fixedly connected to the valve seat portion; the nut assembly is located in a chamber of the valve tube, and the flow clearance is in communication with the chamber of the valve tube, where a sidewall of the nut assembly is provided with a second communication hole, the second communication hole is configured to communicate a chamber within the nut assembly and a region outside the nut assembly, and the flow clearance is in communication with the chamber within the nut assembly;

The valve needle portion further includes a small valve needle, the large valve needle is fixedly connected to the small valve needle, and the soft sealing member is disposed between the large valve needle and the small valve needle; a first passage is axially formed inside the small valve needle, and a second passage is axially formed inside the large valve needle; the first passage is in communication with the second passage, the first passage is in communication with the valve port, and the second passage is in communication with the chamber within the screw rod assembly.

Further, the electronic expansion valve also includes a screw rod assembly, and the screw rod assembly is in engagement with the valve needle portion to drive the valve needle portion to reciprocate; the screw rod assembly includes a screw rod, an assembly sleeve, a bearing, a bushing and a small elastic member; the screw rod is connected to an inner ring of the bearing, and an outer ring of the bearing is located inside the assembly sleeve and is in a limiting fit with the assembly sleeve; the bushing abuts against a side of the outer ring of the bearing facing the valve port; the small elastic member is sleeved on the bushing, an end of the small elastic member that is away from the bearing abuts against the valve needle portion, and the assembly sleeve is fixedly connected to the valve needle portion;

The bushing has a through hole, which provides clearance for the inner ring of the bearing and an end portion of the screw rod; or, the bushing has a recess with an opening facing the screw rod; the recess of the bushing provides clearance for the inner ring of the bearing and an end portion of the screw rod, and an end of the bushing facing the valve port is a solid structure;

The small elastic member is a spring, and both the bushing and the small elastic member are located inside the assembly sleeve;

The assembly sleeve includes an assembly cylinder and an annular stop wall, the annular stop wall is located at an end of the assembly cylinder away from the valve port, a portion of the valve needle portion is inserted into the assembly cylinder and fixedly connected to the assembly cylinder, and the outer ring of the bearing abuts against the annular stop wall;

The screw rod includes a limiting ring, an end of the inner ring of the bearing away from the valve port abuts against the limiting ring, and the end portion of the screw rod and an end of the inner ring of the bearing facing the valve port are riveted.

Further, the valve seat portion includes a large valve seat, the large valve seat has a limiting step, an end surface of the guide sleeve abuts against the limiting step, and an outer wall of the guide sleeve is in an interference fit with an inner wall of the large valve seat;

The valve seat portion further includes a small valve seat, which is fixedly connected to the large valve seat and has the valve port;

An annular assembly groove is formed between the guide sleeve and the large valve seat, and a portion of the small valve seat is inserted into the annular assembly groove; the inner wall of the large valve seat is in an interference fit with an outer wall of the small valve seat, and the outer wall of the guide sleeve is in an interference fit with an inner wall of the small valve seat;

The guide sleeve includes a first sleeve section and a second sleeve section that are interconnected, an outer diameter of the first sleeve section is greater than an outer diameter of the second sleeve section, the first sleeve section is in a limiting fit with the inner wall of the large valve seat, the annular assembly groove is formed between the second sleeve section and the inner wall of the large valve seat, and an end surface of the small valve seat abuts against an end surface of the first sleeve section;

An outer wall of the guide sleeve at an end facing the valve port has a chamfer, and an outer wall and an inner wall of an end of the small valve seat away from the valve port both have chamfers;

An outer circumferential surface of the large valve seat is provided with a thread and a first outer sealing groove, and a first outer sealing ring is disposed in the first outer sealing groove;

An outer circumferential surface of the small valve seat is provided with a second outer sealing groove, and a second outer sealing ring is disposed in the second outer sealing groove;

The small valve seat is welded to the large valve seat, a plurality of orifices are circumferentially distributed on the small valve seat, and each of the plurality of orifices faces the valve needle portion.

The present invention further provides an assembly method, including: first inserting the large valve needle through the guide sleeve, and then connecting the large valve needle to the soft sealing member;

The electronic expansion valve further includes a small valve needle, and the assembly method includes: inserting the large valve needle through the guide sleeve; sleeving the soft sealing member onto the small valve needle, and pressing an end of the small valve needle, with the soft sealing member sleeved thereon, into the large valve needle that passes through the guide sleeve, where before the large valve needle is inserted through the guide sleeve, an inner sealing ring is sleeved in an inner sealing groove of the large valve needle;

Or, the electronic expansion valve further includes a small valve needle, and the assembly method includes: inserting the large valve needle through the guide sleeve; sleeving the soft sealing member onto a mounting section of the large valve needle, and sleeving the small valve needle onto the mounting section of the large valve needle, where before the large valve needle is inserted through the guide sleeve, an inner sealing ring is sleeved in an inner sealing groove of the large valve needle;

The electronic expansion valve further includes a screw rod assembly, and the assembly method further includes: fixedly connecting an end of the large valve needle, away from the valve port, to the screw rod assembly;

The screw rod assembly, the valve needle portion and the guide sleeve constitute an assembly component, and the assembly method further includes: installing the assembly component into the valve seat portion;

The electronic expansion valve further includes a large elastic member, and the assembly method further includes: sleeving the large elastic member onto the screw rod assembly, and abutting an end of the large elastic member against the large valve needle; where the assembly component includes the large elastic member;

The valve seat portion includes a large valve seat and a small valve seat, and the small valve seat has the valve port; and the installing the assembly component into the valve seat portion includes: inserting the small valve needle in the assembly component into the small valve seat, and initially inserting an end of the guide sleeve facing the valve port into the small valve seat; aligning an assembly formed by the assembly component together with the small valve seat with an opening of a chamber of the large valve seat, exerting a pressure toward the large valve seat on the small valve seat to press-fit the small valve seat and the guide sleeve into the chamber of the large valve seat, where an end surface of the guide sleeve abuts against a limiting step inside the large valve seat, an outer wall of the guide sleeve is in an interference fit with an inner wall of the large valve seat, an annular assembly groove is formed between the guide sleeve and the large valve seat, and a portion of the small valve seat is inserted into the annular assembly groove; the inner wall of the large valve seat is in an interference fit with an outer wall of the small valve seat, and the outer wall of the guide sleeve is in an interference fit with an inner wall of the small valve seat;

The screw rod assembly includes a screw rod, an assembly sleeve, a bearing, a bushing and a small elastic member, and the assembly method further includes: pressing an end of the screw rod into an inner ring of the bearing, forming a flanged structure at an end portion of the screw rod, and riveting the flanged structure with the inner ring of the bearing; press-fitting the bearing into the assembly sleeve; placing the bushing into the assembly sleeve, abutting the bushing against an outer ring of the bearing, and sleeving the small elastic member onto the bushing;

The electronic expansion valve further includes a nut assembly and a valve tube, and the assembly method further includes: threadedly connecting the nut assembly to the screw rod assembly, and fixedly connecting the nut assembly to the valve seat portion; sleeving the valve tube over the nut assembly, and fixedly connecting the valve tube with the valve seat portion;

The assembly method further includes: welding the assembly sleeve to the large valve needle; welding the small valve seat to the large valve seat; welding the nut assembly to the large valve seat; and welding the valve tube to the large valve seat.

According to the technical solution, some embodiments of the present invention provide an electronic expansion valve, including a valve seat portion having a valve chamber and a valve port; and a valve needle portion disposed in the valve chamber and including a large valve needle and a soft sealing member connected to the large valve needle, where the soft sealing member is configured to close or open the valve port, an annular sealing ring is formed at a position where an outer surface of the soft sealing member is in contact with an inner surface of the valve port, and at least a portion of the soft sealing member is located outside a region surrounded by the annular sealing ring. In the present solution, a portion of the soft sealing member is located outside the region surrounded by the annular sealing ring, meaning that the size of the soft sealing member is made relatively large, such that the load-bearing capacity, deformation resistance and temperature variation resistance of the soft sealing member are all enhanced, thereby ensuring a sealing effect on the valve port. Compared with the prior art, even if the soft sealing member undergoes certain deformation, a sufficient sealing contact area can still be guaranteed when the soft sealing member is in contact with the valve port, thereby maintaining the sealing effect. Accordingly, the present solution improves the long-term reliability of the electronic expansion valve.

Moreover, the assembly method provided in the present invention is used to assemble a plurality of components in the electronic expansion valve, which achieves high operation efficiency, high assembly accuracy, easy implementation of the process, and low production cost.

### Brief Description of the Drawings

The accompanying drawings, which constitute a part of the present invention, are used for providing a further understanding of the present invention; and illustrative embodiments of the present invention and descriptions thereof are intended to explain the present invention and are not construed to unduly limit the present invention. In the drawings:
Fig. 1 shows a structural schematic view of an electronic expansion valve according to an embodiment of the present invention;
Fig. 2 shows a first partial enlarged view of the electronic expansion valve in Fig. 1;
Fig. 3 shows a second partial enlarged view of the electronic expansion valve in Fig. 1;
Fig. 4 shows a schematic view of a portion of the structure of the electronic expansion valve in Fig. 1;
Fig. 5 shows another structural schematic view of a valve needle portion of the electronic expansion valve; and
Fig. 6 shows a structural schematic view of another electronic expansion valve according to an embodiment of the present invention.

The following reference signs are involved in the accompanying drawings:
100, valve seat portion; 101, valve port; 102, sealing arc surface; 103, valve seat ring; 104, flow hole; 105, flow clearance; 110, large valve seat; 111, limiting step; 120, small valve seat; 130, first outer sealing ring; 140, second outer sealing ring; 200, valve needle portion; 210, small valve needle; 211, adjusting section; 212, assembly section; 213, press-fit recess; 214, cylindrical section; 215, first tapered section; 216, second tapered section; 217, first passage; 220, soft sealing member; 221, sealing chamfered surface; 222, assembly chamfer; 230, large valve needle; 231, limiting section; 232, guiding section; 233, annular member; 234, second passage; 235, mounting section; 240, inner sealing ring; 250, large elastic member; 300, guide sleeve; 310, first sleeve section; 320, second sleeve section; 400, nut assembly; 401, second communication hole; 500, screw rod assembly; 501, first communication hole; 510, screw rod; 520, assembly sleeve; 530, bearing; 540, bushing; 550, small elastic member; 600, valve tube; 710, first connecting pipe; 720, second connecting pipe.

### Detailed Description of the Embodiments

The technical solution in embodiments of the present invention will be clearly and completely described below with reference to the accompanying drawings in the embodiments of the present invention. It is clear that the embodiments described are part of the embodiments of the present invention, but not all of them. The following description of at least one exemplary embodiment is merely illustrative and shall in no way be construed as limiting the present invention or applications and uses thereof. Based on the embodiments of the present invention, all other embodiments obtained by those of ordinary skill in the art without creative efforts shall fall within the scope of protection of the present invention.

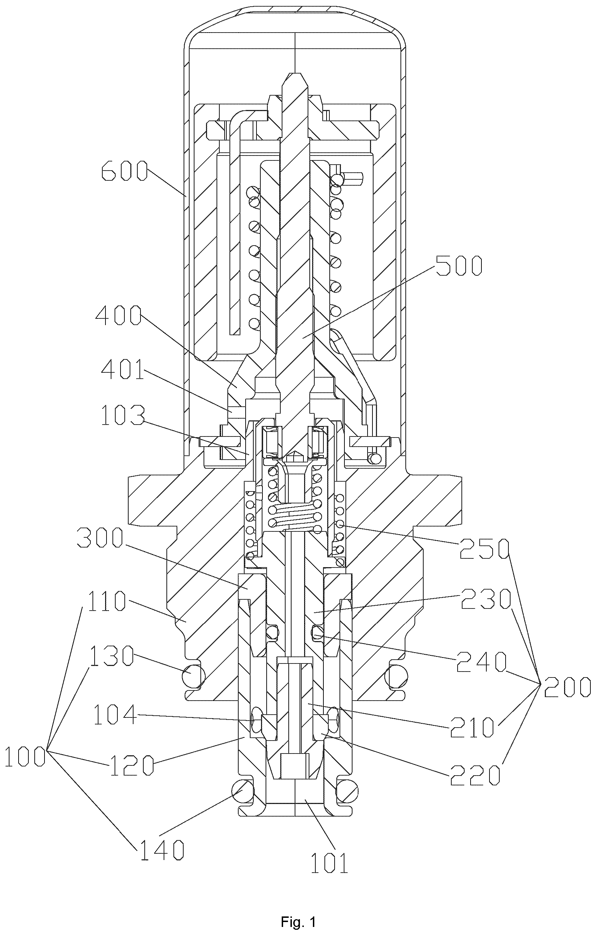

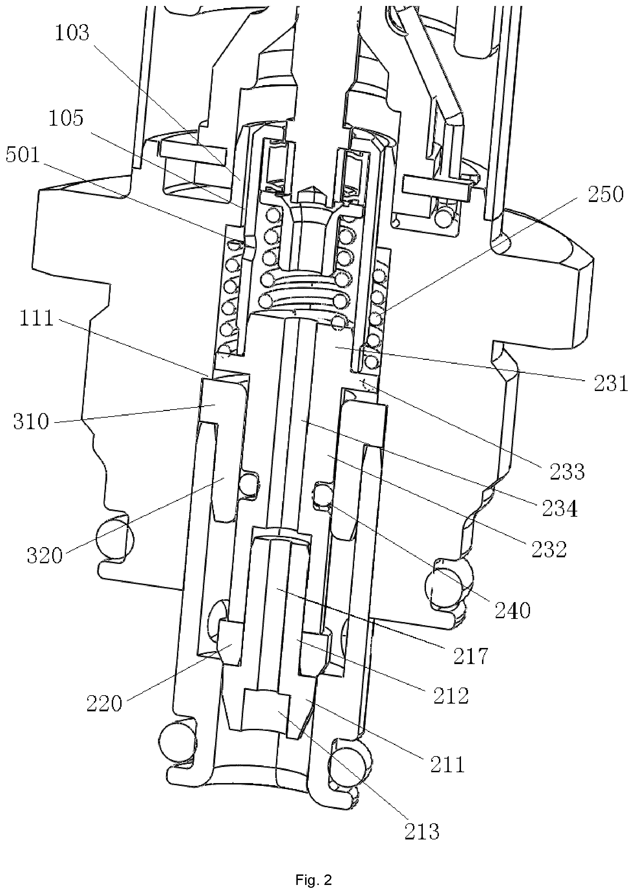

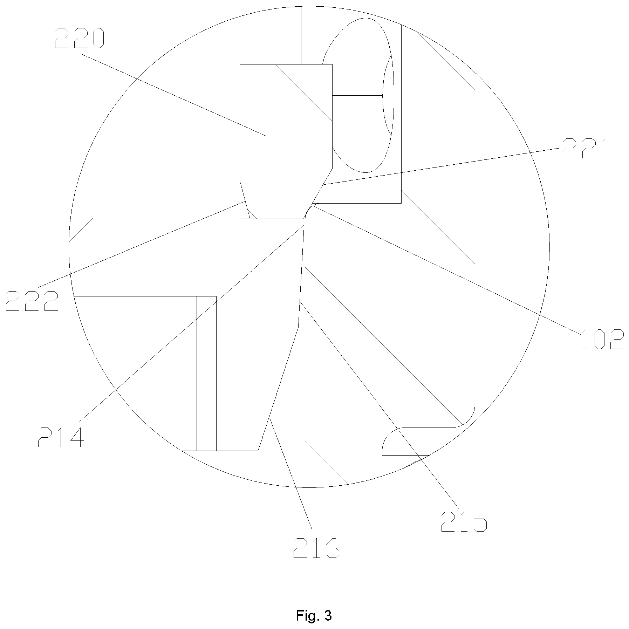

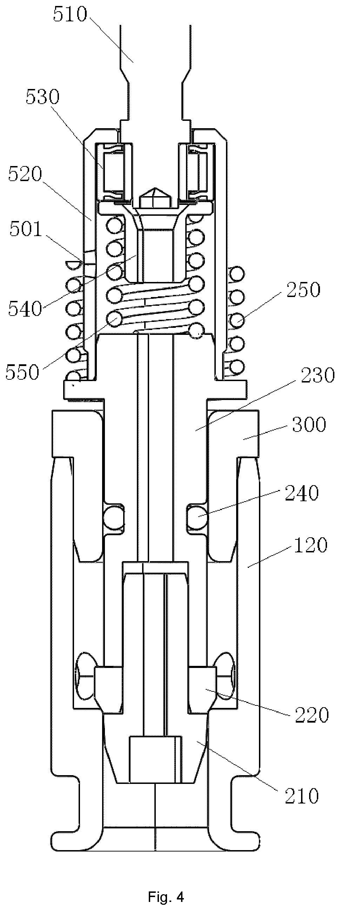

As shown in Fig. 1 to Fig. 6, an embodiment of the present invention provides an electronic expansion valve, including a valve seat portion 100, which has a valve chamber and a valve port 101; and a valve needle portion 200 disposed within the valve chamber, where the valve needle portion 200 includes a large valve needle 230 and a soft sealing member 220 connected to the large valve needle 230; the soft sealing member 220 is configured to open or close the valve port 101, an annular sealing ring is formed at a position where an outer surface of the soft sealing member 220 is in contact with an inner surface of the valve port 101, and at least a portion of the soft sealing member 220 is located outside a region surrounded by the annular sealing ring.

In the present invention, a portion of the soft sealing member 220 is located outside the region surrounded by the annular sealing ring, meaning that the size of the soft sealing member 220 is relatively large, such that the load-bearing capacity, deformation resistance and temperature variation resistance of the soft sealing member 220 are all enhanced, thereby ensuring a sealing effect on the valve port 101. Compared with the prior art, even if the soft sealing member 220 undergoes certain deformation, a sufficient sealing contact area can still be guaranteed when the soft sealing member is in contact with the valve port 101, thereby maintaining the sealing effect. Accordingly, the present solution improves the long-term reliability of the electronic expansion valve.

As shown in Fig. 1, the electronic expansion valve further includes a guide sleeve 300, the guide sleeve 300 is located in the valve chamber, and the large valve needle 230 passes through the guide sleeve 300; the large valve needle 230 reciprocates along the guide sleeve 300 and is in sealing engagement with the guide sleeve 300; and a dimension of the annular sealing ring is equal to an inner diameter of the guide sleeve 300. An outer diameter of the soft sealing member 220 is greater than an outer diameter of a structure of the large valve needle 230 located within the guide sleeve 300, i.e., the outer diameter of the soft sealing member 220 is greater than the inner diameter of the guide sleeve 300. The guide sleeve 300 serves to guide and limit a position of the large valve needle 230. An axis of the guide sleeve 300, an axis of the large valve needle 230, an axis of the small valve needle 210, an axis of the soft sealing member 220 and an axis of the valve port 101 are collinear in the design.

In some embodiments, the large valve needle 230 includes a limiting section 231 and a guiding section 232 that are interconnected, the guiding section 232 passes through the guide sleeve 300 and is connected to the small valve needle 210, the limiting section 231 is located at an end of the guide sleeve 300 away from the valve port 101, and a radial dimension of the limiting section 231 is greater than the inner diameter of the guide sleeve 300. A clearance is provided between the guiding section 232 and an inner wall of the guide sleeve 300, so that the guiding section 232 can slide smoothly.

The valve needle portion 200 further includes an inner sealing ring 240, which is disposed between the inner wall of the guide sleeve 300 and an outer wall of the large valve needle 230. By providing the inner sealing ring 240, the clearance between the guiding section 232 and the inner wall of the guide sleeve 300 can be sealed.

In some embodiments, the outer wall of the large valve needle 230 is provided with an inner sealing groove, in which the inner sealing ring 240 is mounted. The guiding section 232 passes through the guide sleeve 300 and is in movable sealing engagement with the guide sleeve 300 by the inner sealing ring 240. An outer surface of the inner sealing ring 240 abuts the inner wall of the guide sleeve 300, and a diameter of the annular sealing ring is equal to an outer diameter of the inner sealing ring 240, which facilitates the assembly of the inner sealing ring 240 and ensures a sealing effect. Or, the inner wall of the guide sleeve 300 is provided with an inner sealing groove, in which the inner sealing ring 240 is mounted. A diameter of the annular sealing ring is equal to an inner diameter of the inner sealing ring 240.

In some embodiments, by disposing the inner sealing ring 240 between the inner wall of the guide sleeve 300 and the outer wall of the large valve needle 230, the clearance between the inner wall of the guide sleeve 300 and the outer wall of the large valve needle 230 can be sealed, thereby preventing internal leakage within the electronic expansion valve. As a result, a sealing effect at the large valve needle 230 of the electronic expansion valve is improved, thereby enhancing the reliability of the electronic expansion valve. Additionally, the inner sealing ring 240 can be disposed in the inner sealing groove on the outer wall of the large valve needle 230 or in the inner sealing groove on the inner wall of the guide sleeve 300. In some embodiments, the inner sealing ring 240 is disposed in the inner sealing groove on the outer wall of the large valve needle 230. This configuration enables simple installation, facilitates easy operation, avoids deformation of the inner sealing ring 240 during an assembly process, and ensures the sealing effect between the large valve needle 230 and the guide sleeve 300.

In some embodiments, the electronic expansion valve is an internally balanced valve, in which a balance passage is provided within the valve needle portion 200. An end of the balance passage is in communication with the valve port 101, and an other end of the balance passage is in communication with a region in which an end of the valve needle portion 200 away from the valve port 101 is located. In this way, fluid at both axial ends of the valve needle portion 200 is in communication. An end of the valve needle portion 200 close to the valve port 101 and the end away from the valve port 101 are subjected to equal fluid pressure. When the diameter of the annular sealing ring is equal to the outer diameter of the inner sealing ring 240 disposed at the large valve needle 230, or when the diameter of the annular sealing ring is equal to the inner diameter of the inner sealing ring 240 disposed at the inner wall of the guide sleeve 300, the ends of the valve needle portion 200 close to and away from the valve port 101 are subjected to equal pressure from the fluid at the valve port, in opposite directions, thereby ensuring that the pressure exerted by the fluid from the valve port on the large valve needle 230 is balanced. A sidewall of the valve seat portion 100 is provided with a plurality of orifices 104. When the diameter of the annular sealing ring is equal to the outer diameter of the inner sealing ring 240 disposed at the large valve needle 230, or when the diameter of the annular sealing ring is equal to the inner diameter of the inner sealing ring 240 disposed at the inner wall of the guide sleeve 300, the valve needle portion 200 is subjected to equal fluid pressure from the plurality of orifices 104 in opposite directions, thereby ensuring that the pressure exerted by the fluid from the plurality of orifices 104 on the large valve needle 230 is balanced.

With the above configuration, when the diameter of the annular sealing ring is equal to the outer diameter of the inner sealing ring 240 disposed at the large valve needle 230, or the diameter of the annular sealing ring is equal to the inner diameter of the inner sealing ring 240 disposed at the inner wall of the guide sleeve 300, a total pressure exerted by the fluid on the valve needle portion 200 on both sides of the annular sealing ring after the closure of the valve is zero. Thus, internal balance of the electronic expansion valve is achieved, thereby reducing the influence of fluid pressure on valve opening and closing.

In some embodiments, the valve needle portion 200 further includes a small valve needle 210, and a maximum radial dimension of the soft sealing member 220 is greater than a maximum radial dimension of the small valve needle 210. The large valve needle 230 and the small valve needle 210 are fixedly connected, and the soft sealing member 220 is disposed between the large valve needle 230 and the small valve needle 210. Due to the relatively large size of the soft sealing member 220, sleeving and securing the soft sealing member 220 onto an integral valve needle structure during assembly is difficult. By configuring a valve needle structure as a split structure, the soft sealing member 220 is first sleeved onto the small valve needle 210 with a small diameter during assembly, and then the large valve needle 230 and the small valve needle 210 are fixedly connected, thereby achieving both radial and axial limiting of the soft sealing member 220, i.e., achieving the installation and fixation of the soft sealing member 220.

Due to the relatively large size of the soft sealing member 220, sleeving and securing the soft sealing member onto an integral valve needle structure during assembly is difficult. By configuring the valve needle structure as a split structure, the soft sealing member 220 is first sleeved onto the small valve needle 210 with a small diameter during assembly, and then the large valve needle 230 and the small valve needle 210 are fixedly connected, thereby achieving both radial and axial limiting of the soft sealing member 220, i.e., achieving the installation and fixation of the soft sealing member 220.

In some embodiments, the small valve needle 210 includes an adjustment section 211 and an assembly section 212 that are interconnected. A radial dimension of the assembly section 212 is smaller than a radial dimension of the adjustment section 211. The adjustment section 211 is configured to be disposed in the valve port 101. The soft sealing member 220 is sleeved onto the assembly section 212. A portion of the assembly section 212 is inserted into the large valve needle 230. An end of the soft sealing member 220 abuts against an end surface of the adjustment section 211, and an other end of the soft sealing member 220 abuts against an end surface of the assembly section 212. Through the above configuration, a reliable connection between the small valve needle 210 and the large valve needle 230 is achieved, and the connection can be realized by press-fitting, which facilitates assembly. An outer wall of the assembly section 212 and an inner wall of the large valve needle 230 are in an interference fit. Moreover, the above configuration allows both ends of the soft sealing member 220 to be constrained, thereby achieving axial fixation of the soft sealing member 220 in two directions.

As shown in Fig. 1, in some embodiments, the adjustment section 211 has a press-fit recess 213, and an opening of the press-fit recess 213 faces the valve port 101. The press-fit recess 213 is configured to receive a press-fitting tool, so that the small valve needle 210 and the large valve needle 230 can be press-fitted by means of the press-fitting tool. In some embodiments, the adjustment section 211 is in engagement with the valve port 101 and functions to regulate flow. The adjustment section 211 requires high machining precision. If the press-fitting tool directly applies pressure to an end surface of the adjustment section 211, deformation of the adjustment section 211 is likely to occur, which would affect the normal operation of a product. Therefore, the press-fit recess 213 is provided to serve a protective function, thereby preventing deformation of an end of the adjustment section 211.

An outer wall of the end of the assembly section 212 away from the valve port 101 has a chamfer, which provides a guiding function and facilitates insertion of the assembly section 212 into a chamber of the large valve needle 230.

Prior to assembly, an inner diameter of an inner circumferential surface of the soft sealing member 220 is smaller than an outer diameter of the assembly section 212, and an axial length of the soft sealing member 220 is greater than a distance between the adjustment section 211 and the large valve needle 230. In this way, the soft sealing member 220 forms an interference fit with both the small valve needle 210 and the large valve needle 230, which improves a fixing effect of the soft sealing member 220 and makes the soft sealing member 220 less prone to deformation during use.

An end of the inner circumferential surface of the soft sealing member 220 that faces the adjustment section 211 has an assembly chamfer 222, which facilitates insertion of the assembly section 212 into the soft sealing member 220 and thereby facilitating assembly.

The soft sealing member 220 is made of rubber, plastic, or other elastic materials. The small valve needle 210 and the large valve needle 230 are made of metal, such as stainless steel or copper alloy.

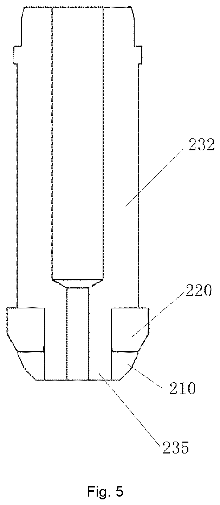

Or, as shown in Fig. 5, in some embodiments, the large valve needle 230 includes a guiding section 232 and a mounting section 235 that are interconnected. A radial dimension of the mounting section 235 is smaller than a radial dimension of the guiding section 232. The soft sealing member 220 is sleeved on the mounting section 235. The small valve needle 210 is annular and is sleeved on the mounting section 235. A maximum radial dimension of the soft sealing member 220 is greater than the radial dimension of the guiding section 232. The soft sealing member 220 is disposed between an end surface of the small valve needle 210 and an end surface of the guiding section 232. This configuration can also achieve reliable fixation of the soft sealing member 220. In some embodiments, the small valve needle 210 and the large valve needle 230 may be connected by means of interference fit or welding.

In some embodiments, the small valve needle 210 includes an adjustment section 211 and an assembly section 212 that are interconnected. A radial dimension of the assembly section 212 is smaller than a radial dimension of the adjustment section 211. The adjustment section 211 is configured to be inserted into the valve port 101, and the soft sealing member 220 is sleeved on the assembly section 212. A diameter of an outer circumferential surface of the soft sealing member 220 is greater than a maximum inner diameter of the valve port 101. An end of the outer circumferential surface of the soft sealing member 220 facing the valve port 101 is provided with a sealing chamfered surface 221. An outer diameter of an end surface of the soft sealing member 220 facing the valve port 101 is smaller than the inner diameter of the valve port 101. An end of the valve port 101 facing the valve chamber is provided with a sealing arc surface 102. The sealing chamfered surface 221 is in sealing engagement with the sealing arc surface 102. With the above structure, a contact area between the soft sealing member 220 and the valve port 101 is large. After elastic deformation of the soft sealing member 220, the soft sealing member 220 is in surface contact with the valve port 101, thereby ensuring reliable sealing of the valve port 101.

Further, an inner circumferential surface of the valve port 101 is a cylindrical surface. The adjustment section 211 includes a cylindrical section 214 and a first tapered section 215. The cylindrical section 214 abuts against the soft sealing member 220, and a larger-diameter end of the first tapered section 215 is connected to the cylindrical section 214. A clearance is provided between the cylindrical section 214 and the inner circumferential surface of the valve port 101. A provision of the cylindrical section 214 not only facilitates removal of burrs generated during machining, but also ensures that a maximum-diameter section of the small valve needle 210 is not shortened due to deburring. As such, a flow regulation curve will not be adversely affected by the deburring of the small valve needle 210. An engagement between the first tapered section 215 and the inner circumferential surface of the valve port 101 allows the electronic expansion valve to achieve an appropriate flow regulation curve during opening and closing process, thereby meeting operational requirements.

Further, when required, the adjustment section 211 also includes a second tapered section 216. A larger-diameter end of the second tapered section 216 is connected to a smaller-diameter end of the first tapered section 215. By providing different tapered sections, variation forms of the flow regulation curve can be enriched to meet user requirements. Certainly, the tapered sections may also be configured as three or more sections as needed. A taper angle of the second tapered section 216 is greater than a taper angle of the first tapered section 215, or the taper angle of the second tapered section 216 is smaller than the taper angle of the first tapered section 215. Or, when required, the adjustment section 211 may not include the second tapered section 216, but instead be provided with a structure having a cylindrical surface or an arc surface to connect to the first tapered section 215 to meet flow regulation requirements.

In some embodiments, the electronic expansion valve further includes a nut assembly 400 and a screw rod assembly 500. The nut assembly 400 is fixedly connected to the valve seat portion 100. The screw rod assembly 500 is in a threaded connection with the nut assembly 400 and is engaged with the large valve needle 230, so as to drive the valve needle portion 200 to reciprocate. The screw rod assembly 500 serves to drive and guide the valve needle portion 200.

The valve needle portion 200 further includes a large elastic member 250. An end of the large elastic member 250 abuts against an inner wall of the valve seat portion 100, and an other end of the large elastic member 250 abuts against the large valve needle 230, so as to exert a force toward the valve port 101 on the valve needle portion 200. The large elastic member 250 can offset a force, which is away from the valve port 101, exerted by the fluid on the valve needle portion 200. Therefore, when the valve port 101 is closed, the large elastic member 250 ensures that the soft sealing member 220 is in reliable contact with the valve port 101, thereby ensuring a sealing effect. Furthermore, due to the presence of the large elastic member 250, when the valve needle portion 200 is subjected to radial fluid impact forces (such as a force exerted by fluid flowing in through the orifices 104 on the small valve needle 210), the valve needle portion 200 is less prone to wobbling, thereby improving reliability of valve closing. On the other hand, a thread clearance is present between mating threads of the nut assembly 400 and the screw rod assembly 500. By means of the large elastic member 250, mating threads of the nut assembly 400 and the screw rod assembly 500 are maintained in abutment in a same direction, so that the thread clearance is eliminated. Therefore, the valve needle portion 200 is not affected by the thread clearance during reciprocating movement, thereby ensuring high precision in flow control of the electronic expansion valve.

In some embodiments, the large elastic member 250 is a spring. The large elastic member 250 is sleeved on the screw rod assembly 500 and is in a compressed state.

In some embodiments, the valve seat portion 100 includes a valve seat ring 103. The screw rod assembly 500 passes through the valve seat ring 103, and the end of the large elastic member 250 abuts an end of the valve seat ring 103, so that the large elastic member 250 is axially limited.

In some embodiments, the large valve needle 230 includes an annular member 233. The other end of the large elastic member 250 abuts against the annular member 233, so that the large elastic member 250 is axially limited.

In some embodiments, a plurality of orifices 104 are circumferentially distributed on the valve seat portion 100. Each of the plurality of orifices 104 extends radially along the valve seat portion 100 and faces the valve needle portion 200, so that the valve chamber of the valve seat portion 100 is in communication with other pipeline structures by the plurality of orifices 104. When the valve port 101 is open, the valve port 101 is in communication with the plurality of orifices 104 by the valve chamber.

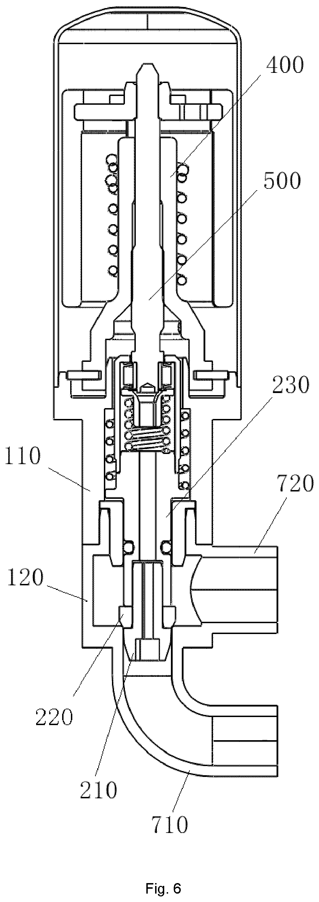

As shown in Fig. 6, in some embodiments, communication with other pipelines can also be achieved by connecting pipes. For example, a first connecting pipe 710 is provided at the valve port 101, and the first connecting pipe 710 is in communication with the valve port 101. A second connecting pipe 720 is provided on a sidewall of the valve seat portion 100, and the second connecting pipe 720 is in communication with the valve chamber. When the valve port 101 is open, the second connecting pipe 720 is in communication with the first connecting pipe 710. When the valve port 101 is closed, the second connecting pipe 720 is disconnected from the first connecting pipe 710.

In some embodiments, the electronic expansion valve further includes a screw rod assembly 500. The screw rod assembly 500 is in engagement with the valve needle portion 200 to drive the valve needle portion 200 to reciprocate. The valve seat portion 100 includes a valve seat ring 103. The screw rod assembly 500 passes through the valve seat ring 103, and a flow clearance 105 is defined between an outer wall of the screw rod assembly 500 and an inner wall of the valve seat ring 103. By providing the flow clearance 105, pressure balance on both axial sides of the valve seat portion 100 can be achieved. The flow clearance 105 is defined between the outer wall of the screw rod assembly 500 and the inner wall of the valve seat ring 103, so that it is unnecessary to machine slots or holes on an inner wall of the valve seat portion 100. Fluid can flow through an assembly clearance, thereby reducing processing costs.

Further, a flow passage is provided in the valve needle portion 200. An end of the flow passage is in communication with the valve port 101, and an other end of the flow passage is in communication with a chamber within the screw rod assembly 500. A first communication hole 501 is formed in a sidewall of the screw rod assembly 500. The chamber within the screw rod assembly 500 is in communication with the flow clearance 105 by the first communication hole 501. This facilitates pressure balance on both axial sides of the valve seat portion 100, thereby improving the reliability of closing the valve port 101.

In some embodiments of the present invention, the electronic expansion valve further includes a nut assembly 400 and a valve tube 600. The nut assembly 400 is fixedly connected to the valve seat portion 100, the screw rod assembly 500 is in a threaded connection with the nut assembly 400, and the valve tube 600 is fixedly connected to the valve seat portion 100. The nut assembly 400 is located in a chamber of the valve tube 600, and the flow clearance 105 is in communication with the chamber of the valve tube 600. A sidewall of the nut assembly 400 is provided with a second communication hole 401, the second communication hole 401 is configured to communicate a chamber within the nut assembly 400 and a region outside the nut assembly 400, and the flow clearance 105 is in communication with the chamber within the nut assembly 400. By providing the second communication hole 401, a pressure balance between internal and external chambers of the nut assembly 400 can be achieved.

In some embodiments, the valve needle portion 200 further includes a small valve needle 210, the large valve needle 230 is fixedly connected to the small valve needle 210, and the soft sealing member 220 is disposed between the large valve needle 230 and the small valve needle 210; a first passage 217 is axially formed inside the small valve needle 210, and a second passage 234 is axially formed inside the large valve needle 230; the first passage 217 is in communication with the second passage 234, the first passage 217 is in communication with the valve port 101, and the second passage 234 is in communication with the chamber within the screw rod assembly 500. Through the cooperation of the first passage 217 and the second passage 234, communication with the flow clearance 105 is achieved. A plurality of passages, holes and clearances cooperate to form a balance passage, so that fluid can enter both axial sides of the valve needle portion 200, thereby facilitating pressure balance.

In some embodiments, the electronic expansion valve further includes a screw rod assembly 500, and the screw rod assembly 500 is in engagement with the valve needle portion 200 to drive the valve needle portion 200 to reciprocate; the screw rod assembly 500 includes a screw rod 510, an assembly sleeve 520, a bearing 530, a bushing 540 and a small elastic member 550; the screw rod 510 is connected to an inner ring of the bearing 530, and an outer ring of the bearing 530 is located inside the assembly sleeve 520 and is in a limiting fit with the assembly sleeve 520; the bushing 540 abuts against a side of the outer ring of the bearing 530 facing the valve port 101; the small elastic member 550 is sleeved on the bushing 540, an end of the small elastic member 550 that is away from the bearing 530 abuts against the valve needle portion 200, and the assembly sleeve 520 is fixedly connected to the valve needle portion 200; the small elastic member 550 provides a force toward the valve port 101 for the valve needle portion 200, thereby improving a sealing effect of closing the valve port 101. When the valve port 101 is closed, a sum of a downward fluid force acting on the valve needle portion 200 and a force of the small elastic member 550 is greater than an upward fluid force acting on the valve needle portion 200, thereby ensuring the sealing effect of the valve port 101. The small elastic member 550 is a spring. Both the bushing 540 and the small elastic member 550 are positioned within the assembly sleeve 520.

In some embodiments, the bushing 540 has a through hole. The through hole of the bushing 540 is configured to provide clearance for the inner ring of the bearing 530 and an end portion of the screw rod 510. Or, the bushing 540 has a recess. An opening of the recess of the bushing 540 faces the screw rod 510, and the recess of the bushing 540 is configured to provide clearance for the inner ring of the bearing 530 and an end portion of the screw rod 510. The end of the bushing 540 facing the valve port 101 is of a solid structure, which improves a sealing effect of the bearing, prevents foreign matter from entering the bearing, and prolongs a service life of the bearing.

In some embodiments, the assembly sleeve 520 includes an assembly cylinder and an annular stop wall. The annular stop wall is located at an end of the assembly cylinder away from the valve port 101. A portion of the valve needle portion 200 is inserted into the assembly cylinder and is fixedly connected to the assembly cylinder. The outer ring of the bearing 530 abuts against the annular stop wall, thereby achieving radial and axial limiting between the bearing 530 and the assembly sleeve 520. The screw rod 510 has a limiting ring. An end of the inner ring of the bearing 530 away from the valve port 101 abuts against the limiting ring. An end portion of the screw rod 510 and the end of the inner ring of the bearing 530 facing the valve port 101 are riveted. Riveted connection provides reliable connection and high assembly efficiency.

In some embodiments, the valve seat portion 100 includes a large valve seat 110. The large valve seat 110 includes a limiting step 111. An end surface of the guide sleeve 300 abuts against the limiting step 111, and an outer wall of the guide sleeve 300 is in an interference fit with an inner wall of the large valve seat 110, thereby achieving mutual limiting and reliable connection between the guide sleeve 300 and the large valve seat 110. The valve seat portion 100 further includes a small valve seat 120 fixedly connected to the large valve seat 110. The small valve seat 120 has the valve port 101.

An annular assembly groove is provided between the guide sleeve 300 and the large valve seat 110, and a portion of the small valve seat 120 is inserted into the annular assembly groove. The inner wall of the large valve seat 110 is in an interference fit with an outer wall of the small valve seat 120, and the outer wall of the guide sleeve 300 is in an interference fit with an inner wall of the small valve seat 120. In this way, a reliable connection between the guide sleeve 300, the large valve seat 110 and the small valve seat 120 is achieved, and coaxiality is more easily ensured.

In some embodiments, the guide sleeve 300 includes a first sleeve section 310 and a second sleeve section 320 that are interconnected. An outer diameter of the first sleeve section 310 is greater than an outer diameter of the second sleeve section 320. The first sleeve section 310 is in a limiting fit with the inner wall of the large valve seat 110, and the annular assembly groove is provided between the second sleeve section 320 and the inner wall of the large valve seat 110. This configuration ensures a connection between the guide sleeve 300 and the large valve seat 110 and forms a space for accommodating the small valve seat 120, thereby facilitating an installation of the small valve seat 120. An end surface of the small valve seat 120 abuts against an end surface of the first sleeve section 310, thereby limiting an insertion depth of the small valve seat 120 into the large valve seat 110.

An outer wall of an end of the guide sleeve 300 facing the valve port 101 has a chamfer. An outer wall and an inner wall of an end of the small valve seat 120 away from the valve port 101 both have chamfers, facilitating alignment and press-fitting operations of components, i.e., the guide sleeve 300 and the small valve seat 120 are press-fitted into the large valve seat 110. Furthermore, in this solution, the small valve seat 120 and the guide sleeve 300 may be preliminarily connected or sleeved together and then pressed into the large valve seat 110. This avoids separate press-fitting operations, allowing the assembly to be completed in a single press-fitting step, and eliminating the need for two press-fitting steps, thereby improving operational efficiency.

An outer circumferential surface of the large valve seat 110 is provided with a thread and a first outer sealing groove. A first outer sealing ring 130 is disposed in the first outer sealing groove. In this way, the electronic expansion valve can be mounted to another seat body by a threaded connection for use, and an outer sealing ring ensures sealing performance between the electronic expansion valve and the seat body, thereby preventing leakage. An outer circumferential surface of the small valve seat 120 is provided with a second outer sealing groove. A second outer sealing ring 140 is disposed in the second outer sealing groove, thereby further enhancing the sealing effect.

To improve connection strength, the small valve seat 120 may also be welded to the large valve seat 110. A plurality of orifices 104 are circumferentially distributed on the small valve seat 120. Each of the plurality of orifices 104 faces the valve needle portion 200. Through the plurality of orifices 104, a chamber outside the electronic expansion valve is in communication with the valve chamber of the valve seat portion 100, thereby allowing fluid delivery.

Some embodiments of the present invention further provide an assembly method. The assembly method is used for the electronic expansion valve described above and includes: first inserting the large valve needle 230 through the guide sleeve 300, and then connecting the large valve needle 230 to the soft sealing member 220. Such an assembly sequence avoids a problem that the large valve needle 230, the guide sleeve 300 and the soft sealing member 220 cannot be connected.

The electronic expansion valve further includes a small valve needle 210. The assembly method includes: inserting the large valve needle 230 through the guide sleeve 300; sleeving the soft sealing member 220 onto the small valve needle 210; and press-fitting an end of the small valve needle 210, with the soft sealing member 220 sleeved thereon, into the large valve needle 230 that is inserted through the guide sleeve 300. The soft sealing member 220 in some embodiments of the present invention has a relatively large size and cannot be directly sleeved and fixed on an integrally formed valve needle. The assembly method enables installation and fixation of the large-size soft sealing member 220. Additionally, the guide sleeve 300 serves to guide and limit the large valve needle 230. Before inserting the large valve needle 230 through the guide sleeve 300, an inner sealing ring 240 is sleeved into an inner sealing groove of the large valve needle 230.

Or, the electronic expansion valve further includes the small valve needle 210, and the assembly method includes: inserting the large valve needle 230 through the guide sleeve 300; sleeving the soft sealing member 220 onto a mounting section 235 of the large valve needle 230; and sleeving the small valve needle 210 onto the mounting section 235 of the large valve needle 230. In this way, the soft sealing member 220 is reliably limited, and the large-size soft sealing member 220 is successfully installed. Before inserting the large valve needle 230 through the guide sleeve 300, an inner sealing ring 240 is sleeved into an inner sealing groove of the large valve needle 230.

The electronic expansion valve further includes a screw rod assembly 500. The assembly method further includes: fixedly connecting an end of the large valve needle 230 away from the small valve needle 210 to the screw rod assembly 500, so that the screw rod assembly 500 can drive the valve needle portion 200 to move during the motion.

The screw rod assembly 500, the valve needle portion 200 and the guide sleeve 300 constitute an assembly component. The assembly method further includes: installing the assembly component into the valve seat portion 100, thereby achieving assembly of the screw rod assembly 500, the valve needle portion 200, the guide sleeve 300 and the valve seat portion 100.

The electronic expansion valve further includes a large elastic member 250. The assembly method further includes: sleeving the large elastic member 250 onto the screw rod assembly 500, with an end of the large elastic member 250 abutting against the large valve needle 230; where the assembly component includes the large elastic member 250. Installing the large elastic member 250 prior to inserting the assembly component into the valve seat portion 100 prevents the large elastic member 250 from being unable to be mounted inside the valve seat portion 100.

In some embodiments, the valve seat portion 100 includes a large valve seat 110 and a small valve seat 120. The small valve seat 120 has the valve port 101. The installing the assembly component into the valve seat portion 100 includes: inserting the small valve needle 210 of the assembly component into the small valve seat 120, and preliminarily inserting an end of the guide sleeve 300 facing the valve port 101 into the small valve seat 120; aligning an assembly formed by the assembly component together with the small valve seat 120 with an opening of a chamber of the large valve seat 110, and exerting a pressure toward the large valve seat 110 on the small valve seat 120 to press-fit the small valve seat 120 and the guide sleeve 300 into the chamber of the large valve seat 110; where an end surface of the guide sleeve 300 abuts against a limiting step 111 inside the large valve seat 110, an outer wall of the guide sleeve 300 is in an interference fit with an inner wall of the large valve seat 110, an annular assembly groove is formed between the guide sleeve 300 and the large valve seat 110, and a portion of the small valve seat 120 is inserted into the annular assembly groove; the inner wall of the large valve seat 110 is in an interference fit with an outer wall of the small valve seat 120, and an outer wall of the guide sleeve 300 is in an interference fit with an inner wall of the small valve seat 120. Through the above assembly method, reliable connection and high coaxiality among the guide sleeve 300, the large valve seat 110 and the small valve seat 120 are achieved. In addition, in this method, the small valve seat 120 and the guide sleeve 300 are press-fitted into the large valve seat 110 together, so that separate press-fitting is not required. The assembly can be completed with a single press-fitting operation, eliminating the need for two press-fitting steps, and thereby improving operational efficiency.

In some embodiments, the screw rod assembly 500 includes a screw rod 510, an assembly sleeve 520, a bearing 530, a bushing 540, and a small elastic member 550. The assembly method further includes: pressing an end of the screw rod 510 into an inner ring of the bearing 530, forming a flanged structure at an end portion of the screw rod 510, and riveting the flanged structure to the inner ring of the bearing 530; press-fitting the bearing 530 into the assembly sleeve 520; placing the bushing 540 into the assembly sleeve 520, ensuring that the bushing is abutted against an outer ring of the bearing 530; sleeving the small elastic member 550 over the bushing 540, thereby achieving reliable connection of components of the screw rod assembly 500.

Further, the electronic expansion valve also includes a nut assembly 400 and a valve tube 600. The assembly method further includes: threadedly connecting the nut assembly 400 to the screw rod assembly 500, and fixedly connecting the nut assembly 400 to the valve seat portion 100; and sleeving the valve tube 600 over the nut assembly 400, and fixedly connecting the valve tube 600 to the valve seat portion 100.

To improve structural strength, the assembly method further includes: welding the assembly sleeve 520 to the large valve needle 230; welding the small valve seat 120 to the large valve seat 110; welding the nut assembly 400 to the large valve seat 110; and welding the valve tube 600 to the large valve seat 110. Connecting sleeved components by welding methods further enhances reliability and ensures long-term use of the electronic expansion valve. The welding methods may be laser welding, brazing, etc.

By using the above assembly method to assemble a plurality of components in the electronic expansion valve, high assembly efficiency and high assembly accuracy are achieved, the process is easy to implement, and the production cost is low.

The foregoing is merely some embodiments of the present invention and is not intended to limit the present invention which may be subject to various modifications and variations to those skilled in the art. Any modification, equivalent replacement, improvement, etc. made within the spirit and principles of the present invention should be included in the scope of protection of the present invention.

## Claims

1. An electronic expansion valve, comprising:
a valve seat portion (100), the valve seat portion (100) having a valve chamber and a valve port (101); and
a valve needle portion (200) disposed in the valve chamber, wherein the valve needle portion (200) comprises a large valve needle (230) and a soft sealing member (220) connected to the large valve needle (230), the soft sealing member (220) is configured to close or open the valve port (101), an annular sealing ring is formed at a position where an outer surface of the soft sealing member (220) is in contact with an inner surface of the valve port (101), and at least a portion of the soft sealing member (220) is located outside a region surrounded by the annular sealing ring.

2. The electronic expansion valve according to claim 1, wherein the electronic expansion valve further comprises a guide sleeve (300), the guide sleeve (300) is located in the valve chamber, and the large valve needle (230) passes through the guide sleeve (300); the large valve needle (230) reciprocates along the guide sleeve (300) and is in sealing engagement with the guide sleeve (300); a dimension of the annular sealing ring is approximately equal to an inner diameter of the guide sleeve (300); wherein an outer diameter of the soft sealing member (220) is greater than an outer diameter of a structure of the large valve needle (230) located within the guide sleeve (300).

3. The electronic expansion valve according to claim 2, wherein
the large valve needle (230) comprises a limiting section (231) and a guiding section (232) that are interconnected, wherein the guiding section (232) passes through the guide sleeve (300), the limiting section (231) is located at an end of the guide sleeve (300) away from the valve port (101), and a radial dimension of the limiting section (231) is greater than the inner diameter of the guide sleeve (300);
the valve needle portion (200) further comprises an inner sealing ring (240), which is located between an inner wall of the guide sleeve (300) and an outer wall of the large valve needle (230);
the outer wall of the large valve needle (230) is provided with an inner sealing groove, and the inner sealing ring (240) is mounted in the inner sealing groove; the guiding section (232) passes through the guide sleeve (300) and is movably in sealing engagement with the guide sleeve (300) by the inner sealing ring (240); an outer surface of the inner sealing ring (240) abuts against the inner wall of the guide sleeve (300), and a diameter of the annular sealing ring is equal to an outer diameter of the inner sealing ring (240);
or the inner wall of the guide sleeve (300) is provided with an inner sealing groove, the inner sealing ring (240) is mounted in the inner sealing groove, and a diameter of the annular sealing ring is equal to an inner diameter of the inner sealing ring (240).

4. The electronic expansion valve according to claim 1, wherein
the large valve needle (230) comprises a guiding section (232) and a mounting section (235) that are interconnected, a radial dimension of the mounting section (235) is smaller than a radial dimension of the guiding section (232), and the soft sealing member (220) is sleeved on the mounting section (235); the valve needle portion (200) further comprises a small valve needle (210), the small valve needle (210) is annular and is sleeved on the mounting section (235), a maximum radial dimension of the soft sealing member (220) is greater than the radial dimension of the guiding section (232), and the soft sealing member (220) is disposed between an end surface of the small valve needle (210) and an end surface of the guiding section (232).

5. The electronic expansion valve according to claim 1, wherein the valve needle portion (200) further comprises a small valve needle (210), a maximum radial dimension of the soft sealing member (220) being greater than a maximum radial dimension of the small valve needle (210); the large valve needle (230) is connected to the small valve needle (210), and the soft sealing member (220) is disposed between the large valve needle (230) and the small valve needle (210).

6. The electronic expansion valve according to claim 5, wherein
the soft sealing member (220) has a sealing chamfered surface (221), the sealing chamfered surface (221) being configured to close or open the valve port (101); the small valve needle (210) comprises an adjustment section (211), the adjustment section (211) being disposed in the valve port (101), and the adjustment section (211) comprises a first tapered section (215).

7. The electronic expansion valve according to claim 6, wherein
an inner circumferential surface of the valve port (101) is a cylindrical surface, the adjustment section (211) further comprises a cylindrical section (214), the cylindrical section (214) abuts against the soft sealing member (220), and a large-diameter end of the first tapered section (215) is connected to the cylindrical section (214), wherein a clearance is formed between the cylindrical section (214) and the inner circumferential surface of the valve port (101);
the adjustment section (211) further comprises a second tapered section (216), and a large-diameter end of the second tapered section (216) is connected to a small-diameter end of the first tapered section (215); and
a taper angle of the second tapered section (216) is greater than a taper angle of the first tapered section (215).

8. The electronic expansion valve according to claim 6, wherein
the small valve needle (210) further comprises an assembly section (212) connected to the adjustment section (211), a radial dimension of the assembly section (212) is smaller than a radial dimension of the adjustment section (211), and the soft sealing member (220) is sleeved on the assembly section (212); a portion of the assembly section (212) is inserted into the large valve needle (230); an end of the soft sealing member (220) abuts against an end surface of the adjustment section (211), and an other end of the soft sealing member (220) abuts against an end surface of the large valve needle (230).

9. The electronic expansion valve according to claim 1, wherein
the electronic expansion valve further comprises a nut assembly (400) and a screw rod assembly (500), the nut assembly (400) is fixedly connected to the valve seat portion (100), the screw rod assembly (500) is in a threaded connection with the nut assembly (400), and the screw rod assembly (500) is in engagement with the large valve needle (230) to drive the valve needle portion (200) to reciprocate;
the valve needle portion (200) further comprises a large elastic member (250), an end of the large elastic member (250) abuts against an inner wall of the valve seat portion (100), and an other end of the large elastic member (250) abuts against the large valve needle (230), so as to exert a force toward the valve port (101) on the valve needle portion (200);
the large elastic member (250) is a spring and is sleeved on the screw rod assembly (500);
the valve seat portion (100) has a valve seat ring (103), the screw rod assembly (500) passes through the valve seat ring (103), and an end of the large elastic member (250) abuts against an end of the valve seat ring (103);
the large valve needle (230) has an annular member (233), and an other end of the large elastic member (250) abuts against the annular member (233).

10. The electronic expansion valve according to claim 1, wherein
the electronic expansion valve further comprises a screw rod assembly (500), the screw rod assembly (500) is in engagement with the valve needle portion (200) to drive the valve needle portion (200) to reciprocate;
the valve seat portion (100) has a valve seat ring (103), the screw rod assembly (500) passes through the valve seat ring (103), and a flow clearance (105) is formed between an outer wall of the screw rod assembly (500) and an inner wall of the valve seat ring (103).

11. The electronic expansion valve according to claim 10, wherein
a flow passage is provided in the valve needle portion (200), an end of the flow passage is in communication with the valve port (101), and an other end of the flow passage is in communication with a chamber within the screw rod assembly (500); a sidewall of the screw rod assembly (500) is provided with a first communication hole (501), and the chamber within the screw rod assembly (500) is in communication with the flow clearance (105) by the first communication hole (501);
the electronic expansion valve further comprises a nut assembly (400) and a valve tube (600), the nut assembly (400) is fixedly connected to the valve seat portion (100), the screw rod assembly (500) is in a threaded connection with the nut assembly (400), and the valve tube (600) is fixedly connected to the valve seat portion (100); the nut assembly (400) is located in a chamber of the valve tube (600), and the flow clearance (105) is in communication with the chamber of the valve tube (600); wherein a sidewall of the nut assembly (400) is provided with a second communication hole (401), the second communication hole (401) is configured to communicate a chamber within the nut assembly (400) and a region outside the nut assembly (400), and the flow clearance (105) is in communication with the chamber within the nut assembly (400).

12. The electronic expansion valve according to claim 10, wherein
the valve needle portion (200) further comprises a small valve needle (210), the large valve needle (230) is fixedly connected to the small valve needle (210), and the soft sealing member (220) is disposed between the large valve needle (230) and the small valve needle (210); a first passage (217) is axially formed inside the small valve needle (210), and a second passage (234) is axially formed inside the large valve needle (230); the first passage (217) is in communication with the second passage (234), the first passage (217) is in communication with the valve port (101), and the second passage (234) is in communication with a chamber within the screw rod assembly (500).

13. The electronic expansion valve according to claim 1, wherein
the electronic expansion valve further comprises a screw rod assembly (500), and the screw rod assembly (500) is in engagement with the valve needle portion (200) to drive the valve needle portion (200) to reciprocate; the screw rod assembly (500) comprises a screw rod (510), an assembly sleeve (520), a bearing (530), a bushing (540) and a small elastic member (550); the screw rod (510) is connected to an inner ring of the bearing (530), and an outer ring of the bearing (530) is located inside the assembly sleeve (520) and is in a limiting fit with the assembly sleeve (520); the bushing (540) abuts against a side of the outer ring of the bearing (530) facing the valve port (101); the small elastic member (550) is sleeved on the bushing (540), an end of the small elastic member (550) that is away from the bearing (530) abuts against the valve needle portion (200), and the assembly sleeve (520) is fixedly connected to the valve needle portion (200);
an end of the bushing (540) facing the valve port (101) is of a solid structure.

14. The electronic expansion valve according to claim 2, wherein
the valve seat portion (100) comprises a large valve seat (110), the large valve seat (110) having a limiting step (111); an end surface of the guide sleeve (300) abuts against the limiting step (111), and an outer wall of the guide sleeve (300) is in an interference fit with an inner wall of the large valve seat (110);
the valve seat portion (100) further comprises a small valve seat (120), which is fixedly connected to the large valve seat (110) and has the valve port (101);
an annular assembly groove is formed between the guide sleeve (300) and the large valve seat (110), and a portion of the small valve seat (120) is inserted into the annular assembly groove; the inner wall of the large valve seat (110) is in an interference fit with an outer wall of the small valve seat (120), and the outer wall of the guide sleeve (300) is in an interference fit with an inner wall of the small valve seat (120).

15. The electronic expansion valve according to claim 14, wherein
the guide sleeve (300) comprises a first sleeve section (310) and a second sleeve section (320) that are interconnected, an outer diameter of the first sleeve section (310) is greater than an outer diameter of the second sleeve section (320), the first sleeve section (310) is in a limiting fit with the inner wall of the large valve seat (110), and the annular assembly groove is formed between the second sleeve section (320) and the inner wall of the large valve seat (110); an end surface of the small valve seat (120) abuts against an end surface of the first sleeve section (310);
an outer wall of the guide sleeve (300) at an end facing the valve port (101) has a chamfer, and an outer wall and an inner wall of an end of the small valve seat (120) away from the valve port (101) both have chamfers.

16. An assembly method, applied to assemble the electronic expansion valve according to claim 2, the assembly method comprising: first inserting the large valve needle (230) through the guide sleeve (300), and then connecting the large valve needle (230) to the soft sealing member (220).

17. The assembly method according to claim 16, wherein
the electronic expansion valve further comprises a small valve needle (210), and the assembly method comprises: inserting the large valve needle (230) through the guide sleeve (300); sleeving the soft sealing member (220) onto the small valve needle (210), and inserting an end of the small valve needle (210), with the soft sealing member (220) sleeved thereon, into the large valve needle (230);
or, the electronic expansion valve further comprises a small valve needle (210), and the assembly method comprises: inserting the large valve needle (230) through the guide sleeve (300); and sleeving the soft sealing member (220) onto a mounting section (235) of the large valve needle (230), and sleeving the small valve needle (210) onto the mounting section (235) of the large valve needle (230).

18. The assembly method according to claim 17, wherein
the electronic expansion valve further comprises a screw rod assembly (500), and the assembly method further comprises: fixedly connecting an end of the large valve needle (230), away from the valve port (101), to the screw rod assembly (500);
the screw rod assembly (500), the valve needle portion (200) and the guide sleeve (300) constitute an assembly component, and the assembly method further comprises: inserting the assembly component into the valve seat portion (100).

19. The assembly method according to claim 18, wherein
the valve seat portion (100) comprises a large valve seat (110) and a small valve seat (120), and the small valve seat (120) has a valve port (101); and the inserting the assembly component into the valve seat portion (100) comprises: inserting the small valve needle (210) in the assembly component into the small valve seat (120), and initially inserting an end of the guide sleeve (300) facing the valve port (101) into the small valve seat (120); aligning an assembly formed by the assembly component together with the small valve seat (120) with an opening of a chamber of the large valve seat (110), and press-fitting the small valve seat (120) and the guide sleeve (300) into the chamber of the large valve seat (110), wherein an end surface of the guide sleeve (300) abuts against a limiting step (111) inside the large valve seat (110), an annular assembly groove is formed between the guide sleeve (300) and the large valve seat (110), and a portion of the small valve seat (120) is inserted into the annular assembly groove; and welding the small valve seat (120) to the large valve seat (110).
